# EUROPEAN PATENT SPECIFICATION

(11) **EP 3 045 548 B1**
(45) Date of publication and mention of the grant of the patent: **09.12.2020**
(21) Application number: 15003637.4
(22) Date of filing: 21.12.2015
(51) Int. Cl.: C14C 1/00, C02F 1/00, C14C 3/06, C14C 3/28, C14C 3/32

(54) **CHROMIUM TANNING PROCESS WITH REDUCED WASTE DISCHARGE**
CHROM-GERBVERFAHREN MIT REDUZIERTEM ABFALLAUSTRAG
PROCÉDÉ DE TANNAGE AU CHROME AVEC RÉDUCTION DE DÉCHARGE DE DÉCHETS

(30) Priority: 22.12.2014 CN 201410795703
(43) Date of publication of application: 20.07.2016
(73) Proprietor: Zhang, Zhuangdou, Shangqiu City 476000 (CN)
(72) Inventor: Zhang, Zhuangdou, Shangqiu City 476000 (CN)
(74) Representative: Beyer, Andreas

(56) References cited:
- EP-A1- 0 637 570
- DATABASE WPI Week 201450 Thomson Scientific, London, GB; AN 2014-P27726 XP002755899, & CN 103 833 155 A (ZHONGNIU GROUP CO LTD) 4 June 2014 (2014-06-04)
- DATABASE WPI Week 201434 Thomson Scientific, London, GB; AN 2014-J38212 XP002755900, & CN 103 663 765 A (CHINA LEATHER & FOOTWEAR IND RES INST) 26 March 2014 (2014-03-26)

## Description

### Field of the Invention

The present invention relates to tanneries and tanning processes and, in particular, waste discharge reduction in the tanning industry.

### Background of the Invention

A large quantity of chemical materials are used in tanning processes, such as acids, alkalis, salts, sulfides, lime, chrome tanning agents, fatliquors, dyes and the like. A considerable portion of the foregoing chemical materials will enter the environment as liquid waste. The liquid waste generated is characterized by its complex composition which contains a large quantity of toxic and harmful materials and pollutants. The liquid waste contains a considerable amount of lime, salts, grease, ammonia nitrogen compounds, proteins, sulfides, chromium salts, dyes, hair, skin dregs, sands and the like. In addition, its COD (chemical oxygen demand) and BOS (biochemical oxygen demand) are also high. The quality and quantity of the liquid waste can vary greatly. In some cases it can emit an obnoxious odor. Accordingly, the liquid waste in tanning industry becomes a type of industrial liquid waste that is difficult to treat.

In addition, during a tanning process, a lot of solid wastes are also generated. Only a portion of these solid wastes can be filtered out with currently available filtering equipment. These solid wastes include mixtures formed by broken hairs, tissue dregs and other materials with relatively large sizes. Since these mixtures are usually in a semi-digested or decomposed state, long term storage of such materials would be harmful to environment.

The portion of the solid wastes which cannot be filtered out are discharged into the environment along with the liquid waste. The foregoing solid wastes cannot be easily treated. Furthermore, discharge of these liquid and solid wastes generate noxious fumes, which leads to serious air pollution.

With recent advances in environmental technology and equipment, the currently several treatment processes for treating tanning liquid waste. However, these processes still cannot meet the ultimate aim of pollution treatment and reduction.

The wastes generated in tanning industry are hard to treat and existing technologies for waste treatment in tanning industry are not able to achieve a satisfactory reduction of liquid wastes, solid wastes and gaseous wastes.

Various materials are present in tanning liquid wastes including materials that inhibit dispersion of collagen fibers, as well as the enzymes, microorganisms and decomposition products, which have detrimental effects. These foregoing mentioned materials hinder recycling of liquid wastes. At the same time, these materials significantly degrade the solid matters generated during tanning process, such as hair and tissue dregs. In cases when these solid matters become digested or decomposed, they can only be collected and treated in the form of solid waste.

The cost for treating such solid form wastes is high. Currently, the cost of treatment technology is much higher than the potential gain from such treatment. As a result, it is difficult to convert these solid wastes back to useful resources. Furthermore, discharging large quantities of liquid and solid wastes results in the waste of a large quantity of renewable resources and causes secondary pollution in the form of obnoxious gases.

EP 0 637 570 A1 discloses an integral treatment of chromium containing wastes from tan-yards. There is provided one or two solid and/or liquid effluents which contain chromium, which are subjected to a treatment with perborate producing a chromium-free residue which is treated by conventional methods (for example hydrolysis in order to produce gums or chelagen) and waters which contain the chromium present as Cr(VI). Said Cr(VI) is reduced to Cr(III) by reduction in acid medium. In a reactor the solution containing Cr(III) is treated continuously with an alkaline solution, to give waters with less than 1 ppm of Cr and a pulp containing Cr(OH)₃·3H₂O from which is obtained, by acidification with sulphuric acid, a concentrated solution of chromium sulphate reusable in the same tan-yard.

Accordingly, a tanning process with reduced discharge of liquid waste, solid waste and gaseous waste is needed.

### Summary of the Invention

A tanning process with reduced discharges of liquid waste, solid waste and gaseous waste is characterized in that its waste recycling procedures are independently implemented in the steps of water soaking, liming, re-liming, de-liming and softening, pickling and chrome tanning, degreasing, re-tanning, neutralizing, and dyeing.

A skin tanning process with reduced waste discharge comprises:
(a) a water soaking step comprising:
   (i) adding well mixed water soaking liquid waste and/or fresh water into a drum containing the skin;
   (ii) introducing an additive into the drum, the additive capable of inhibiting solid material decomposition;
   (iii) adding chemical materials to effect water soaking; and
   (iv) collecting the water soaking liquid waste into a tank for storing the water soaking liquid waste for reuse in subsequent tanning batches;
(b) a liming step comprising:
   (i) adding well mixed liming liquid waste and/or fresh water into a drum containing the skin;
   (ii) introducing the additive into the drum;
   (iii) adding chemical materials to effect liming;
   (iv) adding a liming assisting agent, sodium hydrosulfide and lime, filtering out hairs, and recycling the liming liquid back into the drum for further liming;
   (v) adding further liming liquid waste and/or fresh water;
   (vi) introducing the additive, lime, sodium sulfide, degreasing agent, and liming assisting agent to remove skin residue and disperse fibers;
   (vii) adding further liming liquid waste and/or fresh water and introducing the additive to effect swelling of the limed skin;
   (viii) filtering out solid materials from the liquid waste; and
   (ix) collecting the liming liquid waste into a tank for storing the liming liquid waste for reuse in subsequent tanning batches;
(c) a re-liming step comprising:
   (i) adding well mixed re-liming liquid waste and/or fresh water into a drum containing the skin, then add an additive into the drum;
   (ii) adding chemical materials for re-liming;
   (iii) adding a liming assisting agent, sodium sulfide and lime;
   (iv) rotating the drum to allow the added chemical materials to operate on the limed skin; and
   (v) collecting the re-liming liquid waste into a tank for storing the re-liming liquid waste for reuse in subsequent tanning batches, wherein no solid material filtering is performed in the re-liming step;
(d) a de-liming and softening step comprising:
   (i) adding well mixed liquid waste of de-liming and softening and/or fresh water into a drum containing the skin;
   (ii) introducing the additive into the drum;
   (iii) adding chemical materials to effect de-liming and softening; and;
   (iv) collecting the de-liming and softening liquid waste into a tank for storing the de-liming and softening liquid waste for reuse in subsequent tanning batches;
(e) a pickling and chrome tanning step comprising:
   (i) adding well mixed liquid waste of pickling and chrome tanning and/or fresh water into a drum containing the skin;
   (ii) adding the additive into the drum;
   (iii) adding chemical materials to effect pickling and chrome tanning;
   (iv) adding salt, fungicide, formic acid and sulfuric acid that have been diluted with the liquid waste of pickling and chrome tanning and/or with fresh water,
   (v) rotating the drum to allow the added chemical materials to operate on the skin;
   (vi) adding chrome powder, sodium formate and basifying agent to effect chrome tanning;
   (vii) introducing the additive and increasing temperature in the drum to effect binding of the chrome powder;
   (viii) collecting the pickling and chrome tanning liquid waste into a tank for storing pickling and chrome tanning liquid waste for reuse in subsequent tanning batches; and
   (ix) filtering out blue skin dregs;
(f) a degreasing step comprising:
   (i) adding well mixed degreasing liquid waste and/or fresh water into a drum containing the skin;
   (ii) introducing the additive into the drum;
   (iii) adding chemical materials to effect degreasing; and;
   (iv) collecting the degreasing liquid waste into a tank for storing the degreasing liquid waste for reuse in subsequent tanning batches;
(g) a re-tanning step comprising:
   (i) adding well mixed re-tanning liquid waste and/or fresh water into a drum containing the skin;
   (ii) adding the additive and diluted formic acid or sulfuric acid into the drum;
   (iii) adding chemical materials to effect re-tanning;
   (iv) adding chrome powder, protein powder, aldehyde, sodium formate and baking soda to the rotating drum; and
   (v) collecting the re-tanning liquid waste into a tank for storing re-tanning liquid waste for reuse in subsequent tanning batches;
(h) a neutralizing step comprising:
   (i) adding well mixed neutralizing liquid waste and/or fresh water into a drum containing the skin;
   (ii) adding the additive into the drum;
   (iii) adding neutralizing tannin, sodium formate and baking soda to allow the added chemical materials to operate on the skin; and
   (iv) collecting the neutralizing liquid waste into a tank for storing neutralizing liquid waste for reuse in subsequent tanning batches; and
(j) a dyeing step comprising:
   (i) adding well mixed dyeing liquid waste at pH value of 4.5 to 7.0 and/or fresh water into a drum containing the skin;
   (ii) introducing the additive into the drum;
   (iii) adding chemical materials for dyeing;
   (iv) adding acrylic acid, formic acid, filler, oil and dye while rotating the drum;
   (v) adding chemical materials to effect dyeing; and
   (vi) collecting the dyeing liquid waste into a tank for storing dyeing liquid waste for reuse in future tanning batches.

In the foregoing skin tanning process, the additive is a reagent capable of inhibiting solid material decomposition and favoring liquid waste recycling and the additive is present in an amount of 0.01% to 0.5% of skin weight.

The preferred amount of reusable liquid waste is 20% to 300% of skin weight.

The filtering is preferably performed using a filter having a pore size of 2 mm to 6 mm, and the solid materials obtained from filtering are usable to produce protein filler, degreasing agent, gelatin or building materials.

In the foregoing skin tanning process, the amount of solid waste material in the liquid waste does not substantially affect the quality of tanned skin.

In the foregoing skin tanning process, when liquid waste is not present in sufficient quantities, fresh water is added to make up

### Brief Description of the Drawings

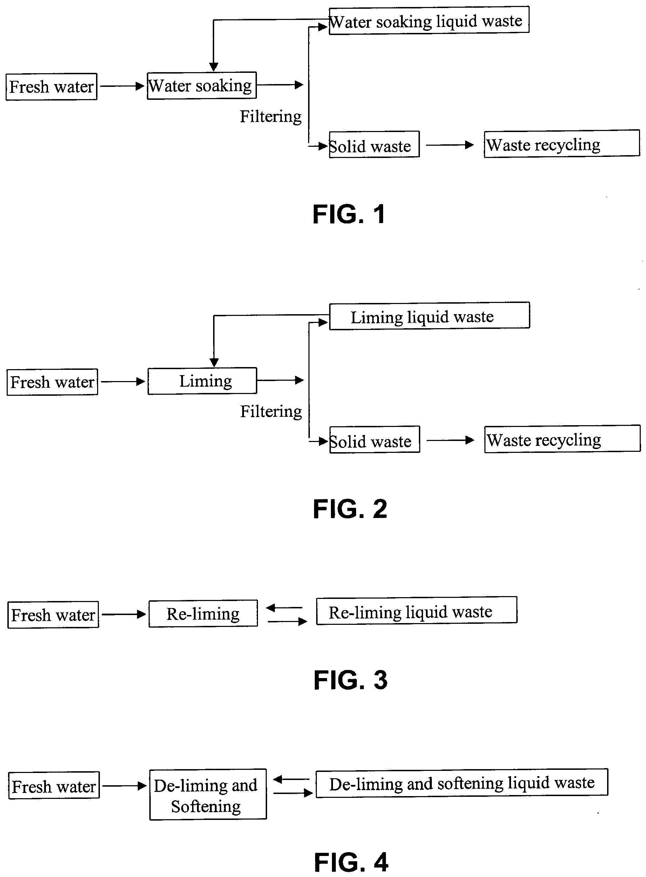

FIGS. 1-10 are schematic views of the procedures of tanning process with reduced discharges of liquid waste, solid waste and gaseous waste.

### Detailed Description of Illustrative Embodiment(s)

The present tanning process reduces discharges of liquid waste, solid waste and gaseous waste is characterized in that its waste recycling procedures are independently implemented in the steps of water soaking, liming, re-liming, de-liming and softening, pickling and chrome tanning, degreasing, re-tanning, neutralizing, and dyeing.

In the water soaking step, mixed water-soaking waste liquid and/or fresh water is added into a drum or paddle, according to the weight of the raw skin. An additive is then introduced and mixed into the drum or paddle. Chemical materials are then added for water soaking in separate steps. When waste liquid is used, the loading amounts of the respective chemical materials are as follows: the degreasing agent is 55% to 85% of that used in the case of fresh water, the water soaking assisting agent is 60% to 85% of that used in the case of fresh water, the antiseptic is based on actual bacterial concentration in liquid, and Na₂CO₃ is 45% to 95% of that used in the case of fresh water. After completion of the water soaking step, hairs, tissue dregs and other solid materials are filtered out, and the liquid waste is collected into a specific tank for water-soaking waste liquid for future use with another batch of raw skin.

In the liming step, well-mixed liming-waste liquid and/or fresh water is added into a drum or paddle, according to the weight of raw skin. An additive is then added and mixed into the drum or paddle. Next the chemical materials for liming in separate steps are added. When the liming-waste liquid is used, the loading amounts of respective chemical materials are as follows: the amount of lime is 45% to 75% of that used in the case of fresh water or is determined according to actual pH value, and the amount of Na₂S is made up to 5 g/L to 10 g/L.

When the step of liming is initiated, a liming assisting agent, sodium hydrosulfide and lime are added for hair saving and unhairing. Hairs are filtered out with a hair filtering machine. The liming liquid is then recycled back into the drum for continuous liming.

An additional liming step is then conducted by adding waste liquid and/or fresh water along with an additive, lime, sodium sulfide, a degreasing agent, a liming assisting agent to remove skin residue and disperse fibers.

A further additional liming step is then conducted by adding waste liquid and/or fresh water along with an additive causing the limed skin to swell. After completion of the liming step, hairs, tissue dregs and other solid materials are filtered out and the liquid is collected into a specific tank for liming-waste liquid for future use.

In the re-liming step, well-mixed re-liming waste liquid and/or fresh water is added and mixed into a drum or paddle with an additive, according to weight of raw skin. Chemical materials for re-liming in separate steps are then added. A liming assisting agent, sodium sulfide and lime are added, and the drum or paddle is rotated to allow the added chemical materials to sufficiently function on the limed skin. After completion of the re-liming step, the liquid waste is collected into a specific tank for re-liming-waste liquid for future use. In some embodiments, filtering need not be performed during the re-liming step.

In the de-liming and softening step, the de-liming process and the softening process are combined into one step, according to weight of limed skin. Well mixed liquid waste of de-liming and softening and/or fresh water into a drum are added. An additive is then added into the drum, mixing well. The chemical materials are then added for de-liming and softening in separate steps. In the case in which liquid waste is used, the loading amounts of respective chemical materials are as follows: the amount of softening enzyme is 45 -75% of that used in the case of fresh water. De-liming agent and 0% to 0.2% of degreasing agent is then added. The drum is rotated to allow the added chemical materials to function on the limed skin, while checking the de-liming effect. In the same bath the softening enzyme is added, while checking the softening effect. After completion of the de-liming and softening step, the liquid waste is collected into a specific tank for de-liming and softening liquid waste for future use with next batch of skin. Solid material filtering is not performed in the de-liming and softening step.

In the step of pickling and chrome tanning, the pickling process and the chrome tanning process are combined into one step, according to weight of limed skin. Well mixed liquid waste of pickling and chrome tanning or fresh water are added into a drum. An additive is introduced into the drum, mixing well. The chemical materials for pickling and chrome tanning are then added in separate steps. In the case in which liquid waste is used, the loading amounts of respective chemical materials are as follows: the amount of salt is 0% to 45% of that used in the case of fresh water. The amount of chrome powder is 45% to 85% of that used in the case of fresh water.

Salt, fungicide, formic acid and sulfuric acid are added, which have been diluted with liquid waste of pickling and chrome tanning or with fresh water, the additive. The drum is rotated to allow the added chemical materials to function on the bare skin. The pickling effect is then checked. In the same bath chrome powder, sodium formate and basifying agent are added, so as to obtain the chrome tanning effect. Further liquid waste of pickling and chrome tanning and/or fresh water are then added. The additive is then introduced, and the temperature in the drum is increased to 35°C to 45°C to allow sufficient binding of the chrome powder. After completion of the pickling and chrome tanning step, the liquid waste is collected into a specific tank for pickling and chrome tanning liquid waste for future use with next batch of skin. In this step, blue skin dregs are filter out.

In the step of degreasing, well mixed degreasing liquid waste and/or fresh water are added into a drum, according to weight of shaved blue skin. An additive is then introduced into the drum, mixing well. The chemical materials for degreasing are then added. In the case in which liquid waste is used for degreasing, the loading amounts of respective chemical materials are as follows: the amount of formic acid is 40% to 75% of that used in the case of fresh water, degreasing agent 0% to 0.5% is then added, rotating the drum to allow the added chemical materials to sufficiently function on the shaved blue skin, checking the degreasing re-softening effect. After completion of the degreasing step, the liquid waste is collected into a specific tank for degreasing liquid waste and blue skin dregs filtered out. The liquid waste is saved for future use with next batch of skin.

In the step of re-tanning, well mixed re-tanning liquid waste and/or fresh water are added into a drum according to weight of shaved blue skin. An additive and diluted formic acid or sulfuric acid are then introduced into the drum, mixing well. The chemical materials for re-tanning are then added. In the case in which liquid waste is used for re-tanning, the loading amounts of respective chemical materials are as follows: the amount of chrome powder is 70% to 85% of that used in the case of fresh water, the amount of protein powder is 30% to 50% of that used in the case of fresh water, and the amount of aldehyde is 60% to 80% of that used in the case of fresh water. Chrome powder, protein powder are then added, rotating the drum. Aldehyde is then added, rotating the drum. Sodium formate is then added, rotating the drum. Baking soda is then added, rotating the drum and checking the re-tanning effect. After completion of the re-tanning step, the liquid waste is collected into a specific tank for re-tanning liquid waste for further use with next batch of skin. Solid material filtering is not performed in the re-tanning step.

In the step of neutralizing, well mixed neutralizing liquid waste and/or fresh water are add into a drum, according to weight of shaved blue skin. An additive is then introduced into the drum, mixing well. The chemical materials for neutralizing are then added. In the case in which liquid waste is used for neutralizing, the loading amounts of respective chemical materials are as follows: the amount of neutralizing tannin is 50% to 80% of that used in the case of fresh water, the amount of sodium formate is 50% to 70% of that used in the case of fresh water, and the amount of baking soda is 50% to 65% of that used in the case of fresh water. Neutralizing tannin and sodium formate are then added, rotating the drum. Baking soda is then added and the drum rotated to allow the added chemical materials to sufficiently function on the shaved blue skin, checking the neutralizing effect. After completion of the neutralizing step, the liquid waste is collected into a specific tank for neutralizing liquid waste for further use with next batch of skin. Solid material filtering is not performed in the neutralizing step.

In the step of dyeing, well mixed dyeing liquid waste at pH of 4.5 to 7.0 and/or fresh water are added into a drum, according to weight of shaved blue skin. An additive is then introduced into the drum, mixing well. The chemical materials for dyeing are then added. In the case in which liquid waste is used for dyeing, the loading amounts of respective chemical materials are as follows: the amount of acrylic acid is 60% to 85% of that used in the case of fresh water, the amount of filler is 50% to 85% of that used in the case of fresh water, the amount of oil is 50% to 75% of that used in the case of fresh water, and the amount of dye is 55% to 75% of that used in the case of fresh water. Acrylic acid is then added, rotating the drum. The filler, oil and dye are then added, rotating the drum. Formic acid is then added, rotating the drum to allow the added chemical materials to sufficiently function on the shaved blue skin, checking the dyeing effect. After completion of the dyeing step, the liquid waste is collected into a specific tank for dyeing liquid waste for further use with next batch of skin. Solid material filtering is not performed in the re-tanning step.

In the above described steps, the mentioned additive is a reagent that is able to inhibit solid material decomposition, as well as in favor of liquid waste recycling, including the DO-PRO series, SS-R, SS-L, Probiotics-II, Probiotics-III, ELIPO-S, ELIPO-L, ELIPO-D and ELIPO-R and the like. The amount of used liquid waste is 20% to 300% of skin weight. The filtering process is carried out with the filtering equipment with pore size of 1 mm to 5 mm, such as filtering screen. In addition, the hairs, tissue dregs, blue skin dregs and other solid materials obtained from the filtering process is substantially intact, which are suitable as the raw materials for producing protein filler, degreasing agent, gelatin or building materials. As a result, the solid wastes that would be discharged to the environment have been greatly reduced.

At the same time, the organic materials generated in the liquid waste are much less than those would be produced in a conventional process. In practice, it has been demonstrated that the small amount of organic materials remaining in the liquid waste, such as grease, interfibrillar substances and the like, would either float on surface or deposit at bottom of the liquid waste storage tank, in which the organic materials floating on surface can be removed manually, and the organic material deposited at the bottom can also be removed with some easy approaches every two or three months.

In the case in which liquid waste contains a small amount of solid waste materials, it will not substantially affect the quality of the produced leather, and will not substantially affect liquid waste recycling as well.

Since both liquid waste and solid waste have been recycled and reused, the stink gas that would be discharged into the atmosphere has been significantly reduced.

In the steps described above, in the case in which the liquid waste is used, if the available liquid waste is insufficient, fresh water can be added.

The initial liquid wastes used are from the conventional processing steps of water soaking, liming, re-liming, de-liming and softening, pickling and chrome tanning, re-tanning, neutralizing and dyeing. The compositions of the respective liquid wastes are typically known. In general, the water soaking liquid waste contains water soaking assisting agent, NaCI, Na₂CO₃, degreasing agent, grease and its decomposition products, hair, keratin, mucin, meat, blood and so on, in which, under normal circumstances, the residual degreasing agent remaining in liquid waste is typically 15% to 30% of the initial adding amount, the residual water soaking assisting agent remaining in liquid waste is typically 15% to 25% of the initial adding amount, the residual Na₂CO₃ remaining in liquid waste is typically 30% to 50% of the initial adding amount. The liming and re-liming liquid wastes respectively contain grease and its decomposition products, salts, lime, liming assisting agent, S²⁻, OH⁻, Na⁺, Ca²⁺, protein and its decomposition products, enzymes, amines and so on, in which, under normal circumstances, the residual lime remaining in liquid waste is typically 37% to 55% of the initial adding amount, the residual Na₂S remaining in liming liquid waste is typically 2.4 g/L to 3.2 g/L. The liquid waste of de-liming and softening contains protein its decomposition products, de-liming agent, degreasing agent, grease and its decomposition products, enzymes, ammonium salts, amines and so on, in which the residual enzymes remaining in liquid waste are typically 30% to 50% of the initial adding amount, the residual ammonium salts remaining in liquid waste are typically 30% to 40% of the initial adding amount. The chrome tanning liquid waste contains Cr³⁺, Cl⁻, SO₄²⁻ , protein and its decomposition products, grease and its decomposition products and so on, in which the residual Cr³⁺ remaining in liquid waste is typically 2.8 g/L to 3.2 g/L, and Cl⁻, typically 7 g/L to 15 g/L. In addition, the residual acid radicals remaining in liquid waste are typically 30% to 45% of the initial adding amount. The re-tanning liquid waste contains Na⁺, Cr³⁺, and organic tanning agent. The neutralizing liquid waste contains neutral salts and so on. Fatliquor, dye, organic dyeing assisting agent and other chemical materials have been used in the dyeing step, in which only a small portion of the foregoing chemical materials would be absorbed, and a majority of them would finally enter the liquid waste. These chemical materials are large molecular organic materials of high concentrations. However, their bio-degradation rates are slow. If the above mentioned various liquid wastes are freely discharged to the environment, it will not only cause serious environmental pollution, but also result in great waste of resources.

The tanning process has reduced discharges of liquid waste, solid waste and gaseous waste. In addition, the liquid wastes have been recycled and reused, which greatly reduces discharges of liquid wastes, gaseous wastes and solid wastes. Accordingly, it is able to reduce more than 70% of water consumption and reduce more than 20% of energy consumption. The discharge of solid wastes (such as sludge and the like) has been reduced by more than 70%. Chemical materials have been saved for 15% to 100%, and accordingly, the air pollution caused by chemical material volatilization has been reduced as well. In addition, the gain of leather increases 5% to 10%. In particular, the wrinkles on the original thick blue skin have been significantly reduced. Leather weight increases about 10%, shrinkage temperature increases 3°C to 12°C, and tearing strength increases about 15%. In skin splitting, the weight of second layer increases 15% to 30%. Further, the loose grain rate decreases more than 15%. Moreover, as chemical materials are hard to penetrate into the original thick skin, the produced blue skin usually has large wrinkles, which result in a low gain of leather. Nevertheless, with employment of the process provided, the quality of original thick skin has been significantly improved.

As shown in FIG. 1, in the step of water soaking, the collected water soaking liquid waste is pumped into a water soaking drum by an acid and alkali resistant pump, the water soaking process with water soaking liquid waste is as follows: based on weight of raw skin, add 180% of water soaking liquid waste, 0.15% of Probiotics-III, 0.15% of ELIPO-S, and rotate at 22° C for 10 minutes, then add 0.4% of water soaking assisting agent, 0.3% of degreasing agent, 0.6% of sodium carbonate, rotate for 30 minutes/ rest for 30 minutes and performing 4 times in total of the foregoing rotating/ resting procedure; next add 0.35% of antiseptic, rotate for 30 minutes, and then rotate 5 minutes/ rest 55 minutes, performing the foregoing rotating/ resting procedure continuously for overnight; on the next day, rotate for 20 minutes to reach the condition of pH 9.0, temperature 23°C and Baume degree 4.0. After completion of the water soaking step, hairs, tissue dregs and other solid materials are filtered out and the liquid waste discharged into a liquid waste tank.

As shown in FIG. 2, in the step of liming, the collected liming liquid waste is pumped into a liming drum by an acid and alkali resistant pump, the liming process with liming liquid waste is as follows: based on weight of raw skin, add 80% of liming liquid waste, 0.12% of ELIPO-L, and rotate at 22°C for 15 minutes, and then add 1.2% of liming assisting agent, 1.2% of lime, 0.1% of degreasing agent and 0.1% of NaHS, rotate for 15 minutes and then rest for 15 minutes and performing 2 times in total of the foregoing rotating/ resting procedure; next add 0.3% of NaHS, rotate for 20 minutes; filter hair for 60 minutes; next add 20% of liming liquid waste, 0.03% of ELIPO-L, 0.5% of sodium sulfide, 1.0% of lime, rotate for 20 minutes and then rest for 20 minutes and performing 2 times in total of the foregoing rotating/ resting procedure; next add 20% of liming liquid waste, 0.03% of ELIPO-L, 0.5% of sodium sulfide, 1.3% of lime, 0.2% of liming assisting agent, rotate for 10 minutes and then rest for 20 minutes and performing 6 times in total of the foregoing rotating/ resting procedure; next add 60% of liming liquid waste, 0.09% of ELIPO-L, rotate for 10 minutes and then rest for 50 minutes and performing 4 times in total of the foregoing rotating/ resting procedure; subsequently, in each hour rotate 5 minutes and rest 55 minutes, performing the foregoing rotating/ resting procedure continuously for overnight; on the next day, rotate 15 minutes, prior to discharging the liquid waste from the drum, test at temperature 25°C, and save the liquid waste for future use.

As shown in FIG. 3, in the step of re-liming, the collected re-liming liquid waste is pumped into a re-liming drum by a lye pump, the re-liming process with re-liming liquid waste is as follows: based on weight of raw skin, add 200% of re-liming liquid waste, 0.15% of ELIPO-L, and rotate at 25°C for 10 minutes, and then add 1.5% of lime, 0.2% of sodium sulfide and 0.4% of liming assisting agent, rotate for 35 minutes and rest for 35 minutes, next, rotate 5 minutes/ rest 55 minutes, continuously performing 12 times in total of the foregoing rotating/ resting procedure for overnight; after completion of the re-liming step, discharge the re-liming liquid waste into a re-liming liquid waste tank.

As shown in FIG. 4, in the step of de-liming and softening, which combines the process of de-liming and the process of softening, the collected liquid waste of de-liming and softening is pumped into a de-liming and softening drum by a lye pump, the de-liming and softening process with de-liming and softening liquid waste is as follows: based on weight of limed skin, add 70% of de-liming and softening liquid waste, 0.15% of ELIPO-D, and rotate at 29°C for 10 minutes, and then add 0.2% of degreasing agent, 1.5% of de-liming agent, rotate for 40 minutes, and then at pH 8.8, using phenolphthalein to examine and showing that the de-liming process has reached four fifths of depth; next add 0.25% of softening enzyme and rotate for 30 minutes under the condition of pH 9.0 and temperature 29 ° C; after completion of the de-liming and softening step, discharge the de-liming and softening liquid waste into a de-liming and softening liquid waste tank.

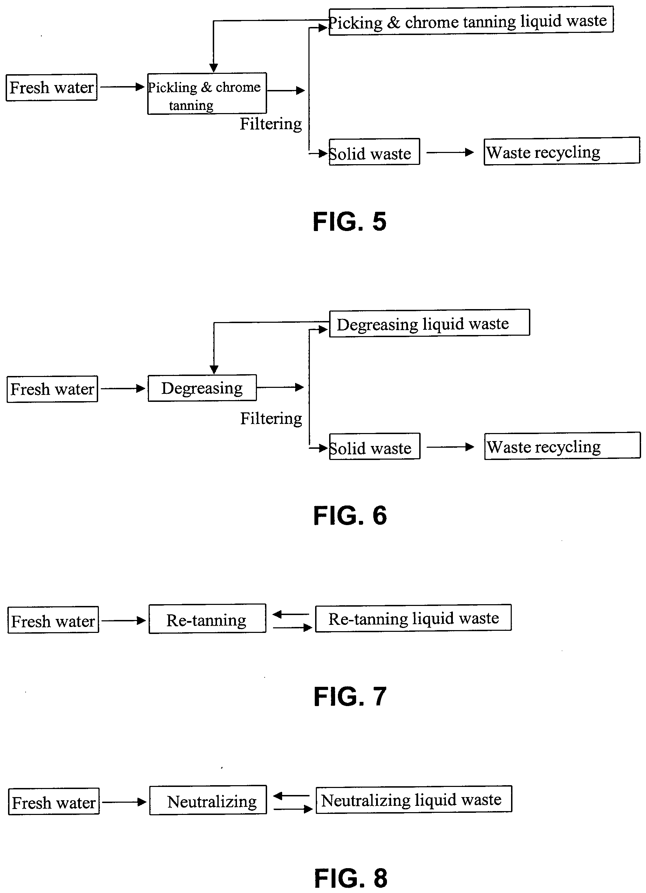

As shown in FIG. 5, in the step of pickling and chrome tanning, which combines the process of pickling and the process of chrome tanning, the collected liquid waste of pickling and chrome tanning is pumped into a pickling and chrome tanning drum by an acid and alkali pump, the pickling and chrome tanning process with pickling and chrome tanning liquid waste is as follows: based on weight of limed skin, add 70% of pickling and chrome tanning liquid waste, 0.15% of ELIPO-D, and rotate at 18°C for 10 minutes, then add 0.2% of fungicide, and rotate for 10 minutes; next, add 0.5% of formic acid that has been diluted for 20 times with a chrome solution, rotate for 20 minutes; next add 1.3% of sulfuric acid that has been diluted for 20 times with the chrome solution, rotate for 90 minutes, and then at pH 2.0 and temperature of 24°C, using bromocresol green to examine and showing that the processing effect has reached the center; next add 2.5% of chrome powder and rotate for 30 minutes; then add 2.0% of chrome powder and rotate for 1 hour; add 0.5% of sodium formate and rotate for 30 minutes; subsequently, add 0.4% of basifying agent and rotate for 4 hours; next, add 80% of pickling and chrome tanning liquid waste, 0.15% of ELIPO-D, increasing temperature to 42°C and rotate for 5 hours, at pH 3.2, temperature 42°C, the shrinkage temperature is 100°C; after completion of the pickling and chrome tanning step, discharge the pickling and chrome tanning liquid waste into a pickling and chrome tanning liquid waste tank.

As shown in FIG. 6, in degreasing step 610, collected degreasing liquid waste 620 is pumped into a degreasing drum by an acid and alkali resistant pump, the degreasing process with degreasing liquid waste is as follows: based on weight of shaved blue skin, add 200% of degreasing liquid waste, 0.1% of ELIPO-D, and rotate at 40°C for 10 minutes; and then add 0.1% of degreasing agent, 0.15% of formic acid and rotate for 60 minutes; under the condition of pH 3.5 and temperature of 40°C, after completion of the degreasing step, discharge the degreasing liquid waste into a degreasing liquid waste tank, as well as filter out the blue skin dregs, save the liquid waste for future use with next batch of skin.

As shown in FIG. 7, in the step of re-tanning, the collected re-tanning liquid waste is pumped into a re-tanning drum by an acid and alkali resistant pump, the re-tanning process with re-tanning liquid waste is as follows: based on weight of shaved blue skin, add 150% of re-tanning liquid waste, 0.5% of ELIPO-D, 0.5% of formic acid and rotate at 35°C and pH 3.0 for 10 minutes; and then add 3.5% of chrome powder, 1.0% of re-tanning agent (TR3318, a product of BIOSK), rotate for 60 minutes; next add 1.0% of aliphatic aldehyde (PL, a product of BIOSK), rotate for 30 minutes; subsequently add 1.0% of sodium formate, and rotate for 20 minutes; then add 0.6% of baking soda and rotate for another 60 minutes, and at pH 3.8 staying for overnight; on the next day, rotate for 20 minutes, after completion of the re-tanning step, discharge the re-tanning liquid waste into a re-tanning liquid waste tank for future use with next batch of skin.

As shown in FIG. 8, in the step of neutralizing, the collected neutralizing liquid waste is pumped into a neutralizing drum by an acid and alkali resistant pump, the neutralizing process with neutralizing liquid waste is as follows: based on weight of shaved blue skin, add 200% of neutralizing liquid waste, 0.3% of ELIPO-E, adjust temperature to 32°C, and then add 1.5% of neutralizing tannin (WB-NEU, a product of BIOSK) and 1.5% of sodium formate, rotate for 40 minutes; next add 0.3% of baking soda and rotate for 60 minutes, adjust pH to 4.5; after completion of the neutralizing step, discharge the neutralizing liquid waste into a neutralizing liquid waste tank.

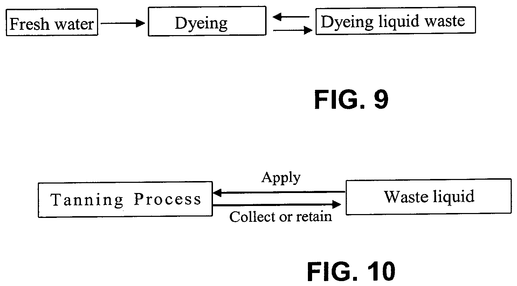

As shown in FIG. 9, in the step of dyeing, using a solution of baking soda to adjust the pH value of collected dyeing liquid waste to 5.5, and then pumping the dyeing liquid waste into a dyeing drum by an acid and alkali resistant pump, the dyeing process with dyeing liquid waste is as follows: based on weight of shaved blue skin, add 50% of dyeing liquid waste, 0.5% of ELIPO-R, adjust temperature to 30°C, and add 3.0% of acrylic acid re-tanning agent TP340, 2.0% of filler (TR3510, a product of BIOSK), and rotate for 30 minutes; next add 4.0% of dicyandiamide (DCD) re-tanning agent R7, 1.5% of super light-weighted composite filler (TR3311, a product of BIOSK), 4.0% of Mimosa Extract (ME), 2.0% of replacement tannin OS, 2.0% of Dye, and rotate for 80 minutes; next add 2.5% of composite fatliquor DB, 2.5% of lecithin BA, 1.5% of synthetic fatliquor (TR3303, a product of BIOSK), 1.5% of neat's foot oil COYD7, and rotate for 60 minutes; next add 150% of dyeing liquid waste, rotate for 10 minutes at 50°C, then add 2.0% of formic acid, which has been added in 3 times with an interval of 20 minutes between each time, at pH 3.5, it has been shown that the dye has penetrated throughout the skin; after completion of the dyeing step, discharge the dyeing liquid waste into a tank for the dyeing liquid waste of the same color for future use with next batch of skin.

In the embodiment described above, some of the chemicals materials can be obtained from the BIOSK (Shangqiu) Chemical Corporation, Ltd. They include water soaking assisting agent ES-10, degreasing agent W100, liming assisting agent DOPRO, 7014, antiseptic 8211L, fungicide DK50, de-liming agent BIDEL, softening enzyme BIONG and basifying agent BE.

### Specific Examples

The present invention will be further described below with reference to FIG. 10 and examples.

### Specific Example 1

As shown in FIG. 10, in a soaking procedure, relative to the weight of raw hide, 160% soaking waste liquid, 0.24% ELIPO, 0.35% bactericide, the temperature is 22°C, 0.5% soaking agent, 0.25% degreasing agent, 0.4% soda ash, 0.2% soaking enzyme, and rotate for 120 min.; subsequently, rotate for 15 min. and stop for 45 min. every hour for overnight; on the second day, rotate continuously for 20 min.

### Specific Example 2

As shown in FIG. 10, in a unhairing and liming procedure, relative to the weight of raw hide, 120% unhairing and liming waste liquid, 0.20% ELIPO, 2.5% DO-PRO, rotate for 30 min., and the temperature is 15°C; 2.5% lime, rotate for 20 min. and stop for 20 min.; 1.2% sodium sulfide, rotate for 50 min.; screen hair for 150 min.; 0.3% sodium sulfide, 0.1% NaHS, 0.2% lime, rotate for 20 min. and stop for 20 min. for two combinations of rotation and stop; 20% waste liquid, 0.03% ELIPO; 0.2% sodium sulfide, 0.3% lime, 0.4% DO-PRO, rotate for 10 min. and stop for 20 min. for six combinations of rotation and stop; 65% unhairing and liming waste liquid, 0.10% ELIPO, 0.05% liming enzyme, rotate for 5 min., subsequently, rotate for 15 min. and stop for 45 min. every hour for overnight; on the second day, rotate for 30 min.

### Specific Example 3

As shown in FIG. 10, in a re-liming procedure, relative to the weight of limed hide, 180% re-liming waste liquid, 0.27% ELIPO, rotate for 5 min.; 1.0% lime, 1.5% DO-PRO, rotate for 10 min., subsequently, stop for 58 min. for every 2 min. of rotation for 5 combinations of rotation and stop.

### Specific Example 4

As shown in FIG. 10, in a deliming and bating procedure, relative to the weight of limed hide, 80% deliming and bating waste liquid, 0.12% ELIPO, 0.2% degreasing agent, 1.5% deliming agent, and rotate for 30 min.; 0.1% bating enzyme, and rotate for 30 min.

### Specific Example 5

As shown in FIG. 10, in a degreasing procedure, relative to the weight of shaved, 200% degreasing waste liquid, 0.3% ELIPO, the temperature is 40°C, and rotate for 10 min.; 0.3% degreasing agent, 0.3% oxalic acid, and rotate for 60 min.

### Specific Example 6

As shown in FIG. 10, in a re-tanning procedure, relative to the weight of shaved, 150% re-tanning waste liquid, 0.22% ELIPO, the temperature is 25°C, 0.3% formic acid, and rotate for 10 min.; 1.0% aliphatic aldehyde, and rotate for 30 min.; 2.0% chromium powder, 1.5% re-tanning agent TR3318, and rotate for 60 min.; 1.0% sodium formate, and rotate for 20 min.; 0.2% baking soda, 0.3% DO-PRO, and rotate for 60 min.; stop the drum overnight, and on the second day, rotate for 20 min.

### Specific Example 7

As shown in FIG. 10, in a neutralizing procedure, relative to the weight of shaved, 180% neutralizing waste liquid, 0.27% ELIPO, 2.0% neutralizing agent WB-NEU, 1.5% sodium formate, and rotate for 30 min.; 0.3% DO-PRO, 0.5% softening agent LSW, and rotate for 60 min.

### Specific Example 8

As shown in FIG. 10, in a dyeing and fatliquoring procedure, relative to the weight of shaved, 50% dyeing and fatliquoring waste liquid, 0.08% ELIPO, the temperature is adjusted to 35°C, 2.0% acrylic acid re-tanning agent, 2.0% filler, and rotate for 30 min.; 3.5% cyanoguanidine re-tanning agent, 1.5% superlight synthetic filler, 4.0% Mimosa Extract ME, 2.0% displacement tannin, 2.0% dye, and rotate for 80 min.; 150% dyeing and fatliquoring waste liquid, 0.23% ELIPO, the temperature is 50°C, and rotate for 10 min.; 2.5% compound fatliquoring agent DB, 2.5% lecithin, 1.5% synthetic fatliquoring agent, 0.5% neatsfoot oil COYD7, and rotate for 60 min.; 1.5% acetic acid, 1.0% formic acid, which are added in three batches with one batch added every 20 min.

### Specific Example 9

As shown in FIG. 10, in a pre-soaking procedure, relative to the weight of raw hide, 150% waste liquid from the water washing procedure after the completion of the bating procedure, 0.15% ELIPO, 0.3% bactericide 8211L, the temperature is 22°C, 0.2% soaking agent, 0.2% degreasing agent, 0.3% soda ash, and rotate for 180 min.

### Specific Example 10

As shown in FIG. 10, in a unhairing and liming procedure, relative to the weight of raw hide, 60% soaking waste liquid, 1.5% DO-PRO, and rotate for 30 min.; 1.8% lime, 20% liming waste liquid, 0.1% ELIPO, and rotate for 10 min; 1.2% Na2S, and rotate for 20 min.; 30% liming waste liquid, 0.05% ELIPO, and screen hair for 120 min.; 0.75% sodium sulfide, 0.3% NaHS, 1.0% lime, rotate for 20 min., and stop for 20 min. for two combinations of rotation and stop; 20% liming waste liquid, and 0.03% ELIPO; 0.2% sodium sulfide, 0.8% lime, 0.8% DO-PRO, rotate for 10 min., and stop for 20 min. for six combinations of rotation and stop; 65% liming waste liquid, 0.15% ELIPO, 0.1% liming enzyme, rotate for 5 min., subsequently, rotate for 15 min. and stop for 45 min. every hour for overnight

### Specific Example 11

As shown in FIG. 10, in a re-liming procedure, relative to the weight of limed hide, 120% liming waste liquid, 0.15% ELIPO, and rotate for 5 min.; 0.4% DO-PRO, rotate for 10 min., subsequently, stop for 58 min. for every 2. min of rotation for 4 combinations of rotation and stop

### Specific Example 12

As shown in FIG. 10, in an pickling and tanning procedure, relative to the weight of limed hide, 50% deliming and bating waste liquid, 0.1% ELIPO, 0.3% anti-mildew agent, 0.5% salts, and rotate for 10 min.; formic acid 0.5%, and rotate for 10 min.; 1.8% sulfuric acid, and rotate for 90 min.; 1.0% sodium formate, and rotate for 30 min.; 2.5% chromium powder, and rotate for 30 min.; 2.0% chromium powder, and rotate for 1 hr.; 0.2% ELIPO, and rotate for 30 min.; 0.3% basifying agent, and rotate for 4 hrs.; 80% pickling and tanning waste liquid, 0.12% ELIPO, heat to 40°C, rotate for 5 hrs., and the procedure ends.

### Specific Example 13

As shown in FIG. 10, in a degreasing procedure, relative to the weight of shaved, 80% fresh water, 120% degreasing waste liquid, 0.1% ELIPO, the temperature is 40°C, and rotate for 10 min.; 0.1% degreasing agent, 0.2% DO-PRO, 0.15% formic acid, and rotate for 60 min.

### Specific Example 14

As shown in FIG. 10, in a re-tanning procedure, relative to the weight of shaved, 100% fresh water, 100% re-tanning waste liquid, 0.15% ELIPO, the temperature is 35°C, 0.5% formic acid, and rotate for 10 min.; 3.5% chromium powder, 1.0% re-tanning agent, and rotate for 60 min.; 1.0% aliphatic aldehyde, 1.0% sodium formate, and rotate for 20 min.; 0.3% baking soda, 0.2% DO-PRO, and rotate for 60 min.; stop the drum overnight, and on the second day, rotate for 20 min.

### Specific Example 15

As shown in FIG. 10, in a neutralizing procedure, relative to the weight of shaved, 100% fresh water, 100% neutralizing waste liquid, 0.3% ELIPO, the temperature is adjusted to 32°C, 2.0% neutralizing tannin, 1.0% sodium formate, 0.2% DO-PRO, and rotate for 40 min.; 0.3% baking soda, and rotate for 60 min.

### Specific Example 16

As shown in FIG. 10, in a dyeing and fatliquoring procedure, relative to the weight of shaved, 20% fresh water, 30% dyeing and fatliquoring waste liquid, 0.05% ELIPO, the temperature is adjusted to 30°C, 2.0% acrylic acid re-tanning agent, 2.0% filler, and rotate for 30 min.; 4.5% cyanoguanidine re-tanning agent, 1.5% superlight synthetic filler, 4.0% Mimosa Extract ME, 2.0% displacement tannin, 2.0% black dye, and rotate for 80 min.; 100% dyeing and fatliquoring waste liquid, 50% fresh water, 0.45% ELIPO, the temperature is 50°C, and rotate for 10 min.; 2.8% compound fatliquoring agent, 2.8% lecithin, 1.5% synthetic fatliquoring agent, 0.5% neatsfoot oil, and rotate for 60 min.; 1.2% acetic acid, 1.0% formic acid, which are added in three batches with one batch added every 20 min.

## Claims

1. A skin tanning process with reduced waste discharge comprising:
(a) a water soaking step comprising:
(i) adding well mixed water soaking liquid waste and/or fresh water into a drum containing the skin;
(ii) introducing an additive into the drum, the additive capable of inhibiting solid material decomposition;
(iii) adding chemical materials to effect water soaking; and
(iv) collecting the water soaking liquid waste into a tank for storing the water soaking liquid waste for reuse in subsequent tanning batches;
(b) a liming step comprising:
(i) adding well mixed liming liquid waste and/or fresh water into a drum containing the skin;
(ii) introducing the additive into the drum;
(iii) adding chemical materials to effect liming;
(iv) adding a liming assisting agent, sodium hydrosulfide and lime, filtering out hairs, and recycling the liming liquid back into the drum for further liming;
(v) adding further liming liquid waste and/or fresh water;
(vi) introducing the additive, lime, sodium sulfide, degreasing agent, and liming assisting agent to remove skin residue and disperse fibers;
(vii) adding further liming liquid waste and/or fresh water and introducing the additive to effect swelling of the limed skin;
(viii) filtering out solid materials from the liquid waste; and
(ix) collecting the liming liquid waste into a tank for storing the liming liquid waste for reuse in subsequent tanning batches;
(c) a re-liming step comprising:
(i) adding well mixed re-liming liquid waste and/or fresh water into a drum containing the skin, then add an additive into the drum;
(ii) adding chemical materials for re-liming;
(iii) adding a liming assisting agent, sodium sulfide and lime;
(iv) rotating the drum to allow the added chemical materials to operate on the limed skin; and
(v) collecting the re-liming liquid waste into a tank for storing the re-liming liquid waste for reuse in subsequent tanning batches, wherein no solid material filtering is performed in the re-liming step;
(d) a de-liming and softening step comprising:
(i) adding well mixed liquid waste of de-liming and softening and/or fresh water into a drum containing the skin;
(ii) introducing the additive into the drum;
(iii) adding chemical materials to effect de-liming and softening; and;
(iv) collecting the de-liming and softening liquid waste into a tank for storing the de-liming and softening liquid waste for reuse in subsequent tanning batches;
(e) a pickling and chrome tanning step comprising:
(i) adding well mixed liquid waste of pickling and chrome tanning and/or fresh water into a drum containing the skin;
(ii) adding the additive into the drum;
(iii) adding chemical materials to effect pickling and chrome tanning;
(iv) adding salt, fungicide, formic acid and sulfuric acid that have been diluted with the liquid waste of pickling and chrome tanning and/or with fresh water,
(v) rotating the drum to allow the added chemical materials to operate on the skin;
(vi) adding chrome powder, sodium formate and basifying agent to effect chrome tanning;
(vii) introducing the additive and increasing temperature in the drum to effect binding of the chrome powder;
(viii) collecting the pickling and chrome tanning liquid waste into a tank for storing pickling and chrome tanning liquid waste for reuse in subsequent tanning batches; and
(ix) filtering out blue skin dregs;
(f) a degreasing step comprising:
(i) adding well mixed degreasing liquid waste and/or fresh water into a drum containing the skin;
(ii) introducing the additive into the drum;
(iii) adding chemical materials to effect degreasing; and;
(iv) collecting the degreasing liquid waste into a tank for storing the degreasing liquid waste for reuse in subsequent tanning batches;
(g) a re-tanning step comprising:
(i) adding well mixed re-tanning liquid waste and/or fresh water into a drum containing the skin;
(ii) adding the additive and diluted formic acid or sulfuric acid into the drum;
(iii) adding chemical materials to effect re-tanning;
(iv) adding chrome powder, protein powder, aldehyde, sodium formate and baking soda to the rotating drum; and
(v) collecting the re-tanning liquid waste into a tank for storing re-tanning liquid waste for reuse in subsequent tanning batches;
(h) a neutralizing step comprising:
(i) adding well mixed neutralizing liquid waste and/or fresh water into a drum containing the skin;
(ii) adding the additive into the drum;
(iii) adding neutralizing tannin, sodium formate and baking soda to allow the added chemical materials to operate on the skin; and
(iv) collecting the neutralizing liquid waste into a tank for storing neutralizing liquid waste for reuse in subsequent tanning batches; and
(j) a dyeing step comprising:
(i) adding well mixed dyeing liquid waste at pH value of 4.5 to 7.0 and/or fresh water into a drum containing the skin;
(ii) introducing the additive into the drum;
(iii) adding chemical materials for dyeing;
(iv) adding acrylic acid, formic acid, filler, oil and dye while rotating the drum;
(v) adding chemical materials to effect dyeing; and
(vi) collecting the dyeing liquid waste into a tank for storing dyeing liquid waste for reuse in future tanning batches,
wherein the additive is a reagent capable of inhibiting solid material decomposition and favoring liquid waste recycling and wherein the additive is present in an amount of 0.01% to 0.5% of skin weight.

2. The skin tanning process of claim 1, wherein the amount of reusable liquid waste is 20% to 300% of skin weight.

3. The skin tanning process of claim 1, wherein the filtering is performed using a filter having a pore size of 2 mm to 6 mm, and the solid materials obtained from filtering are usable to produce protein filler, degreasing agent, gelatin or building materials.

4. The skin tanning process of claim 1, wherein the amount of solid waste material in the liquid waste does not substantially affect the quality of tanned skin.

5. The tanning process of claim 1, wherein when liquid waste is not present in sufficient quantities, fresh water is added to make up.

6. A skin tanning process with reduced waste discharge comprising:
(a) a water soaking step comprising:
(i) adding well mixed water soaking liquid waste and/or fresh water into a drum containing the skin;
(ii) introducing an additive into the drum, the additive capable of inhibiting solid material decomposition;
(iii) adding chemical materials to effect water soaking;
(iv) collecting the water soaking liquid waste into a tank for storing the water soaking liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

7. A skin tanning process with reduced waste discharge comprising:
(a) a liming step comprising:
(i) adding well mixed liming liquid waste and/or fresh water into a drum containing the skin;
(ii) introducing the additive into the drum;
(iii) adding chemical materials to effect liming;
(iv) adding a liming assisting agent, sodium hydrosulfide and lime, filtering out hairs, and recycling the liming liquid back into the drum for further liming;
(v) adding further liming liquid waste and/or fresh water;
(vi) introducing the additive, lime, sodium sulfide, degreasing agent, and liming assisting agent to remove skin residue and disperse fibers;
(vii) adding further liming liquid waste and/or fresh water and introducing the additive to effect swelling of the limed skin;
(viii) filtering out solid materials from the liquid waste;
(ix) collecting the liming liquid waste into a tank for storing the liming liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

8. A skin tanning process with reduced waste discharge comprising:
(a) a re-liming step comprising:
(i) adding well mixed re-liming liquid waste and/or fresh water into a drum containing the skin, then add an additive into the drum;
(ii) adding chemical materials for re-liming;
(iii) adding a liming assisting agent, sodium sulfide and lime;
(iv) rotating the drum to allow the added chemical materials to operate on the limed skin;
(v) collecting the re-liming liquid waste into a tank for storing the re-liming liquid waste for reuse in subsequent tanning batches, wherein no solid material filtering is performed in the re-liming step,
wherein the additive is a reagent capable of inhibiting solid material decomposition and favoring liquid waste recycling and wherein the additive is present in an amount of 0.01% to 0.5% of skin weight.

9. A skin tanning process with reduced waste discharge comprising:
(a) a de-liming and softening step comprising:
(i) adding well mixed liquid waste of de-liming and softening and/or fresh water into a drum containing the skin;
(ii) introducing the additive into the drum;
(iii) adding chemical materials to effect de-liming and softening; and
(iv) collecting the de-liming and softening liquid waste into a tank for storing the de-liming and softening liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

10. A skin tanning process with reduced waste discharge comprising:
(a) a pickling and chrome tanning step comprising:
(i) adding well mixed liquid waste of pickling and chrome tanning and/or fresh water into a drum containing the skin;
(ii) adding the additive into the drum;
(iii) adding chemical materials to effect pickling and chrome tanning;
(iv) adding salt, fungicide, formic acid and sulfuric acid that have been diluted with the liquid waste of pickling and chrome tanning and/or with fresh water,
(v) rotating the drum to allow the added chemical materials to operate on the skin;
(vi) adding chrome powder, sodium formate and basifying agent to effect chrome tanning;
(vii) introducing the additive and increasing temperature in the drum to effect binding of the chrome powder;
(viii) collecting the pickling and chrome tanning liquid waste into a tank for storing pickling and chrome tanning liquid waste for reuse in subsequent tanning batches; and
(ix) filtering out blue skin dregs,
wherein the additive is a reagent capable of inhibiting solid material decomposition and favoring liquid waste recycling and wherein the additive is present in an amount of 0.01% to 0.5% of skin weight.

11. A skin tanning process with reduced waste discharge comprising:
(a) a degreasing step comprising:
(i) adding well mixed degreasing liquid waste and/or fresh water into a drum containing the skin;
(ii) introducing the additive into the drum;
(iii) adding chemical materials to effect degreasing; and
(iv) collecting the degreasing liquid waste into a tank for storing the degreasing liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

12. A skin tanning process with reduced waste discharge comprising:
(a) a re-tanning step comprising:
(i) adding well mixed re-tanning liquid waste and/or fresh water into a drum containing the skin;
(ii) adding the additive and diluted formic acid or sulfuric acid into the drum;
(iii) adding chemical materials to effect re-tanning;
(iv) adding chrome powder, protein powder, aldehyde, sodium formate and baking soda to the rotating drum; and
(v) collecting the re-tanning liquid waste into a tank for storing re-tanning liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

13. A skin tanning process with reduced waste discharge comprising:
(a) a neutralizing step comprising:
(i) adding well mixed neutralizing liquid waste and/or fresh water into a drum containing the skin;
(ii) adding the additive into the drum;
(iii) adding neutralizing tannin, sodium formate and baking soda to allow the added chemical materials to operate on the skin; and
(iv) collecting the neutralizing liquid waste into a tank for storing neutralizing liquid waste for reuse in subsequent tanning batches,
wherein the additive is a reagent capable of inhibiting solid material decomposition and favoring liquid waste recycling and wherein the additive is present in an amount of 0.01% to 0.5% of skin weight.

14. A skin tanning process with reduced waste discharge comprising:
(a) a dyeing step comprising:
(i) adding well mixed dyeing liquid waste at pH value of 4.5 to 7.0 and/or fresh water into a drum containing the skin;
(ii) introducing the additive into the drum;
(iii) adding chemical materials for dyeing;
(iv) adding acrylic acid, formic acid, filler, oil and dye while rotating the drum;
(v) adding chemical materials to effect dyeing; and
(vi) collecting the dyeing liquid waste into a tank for storing dyeing liquid waste for reuse in future tanning batches,
wherein the additive is a reagent capable of inhibiting solid material decomposition and favoring liquid waste recycling and wherein the additive is present in an amount of 0.01% to 0.5% of skin weight.

## Patentansprüche

1. Hautgerbverfahren mit reduziertem Abfallaustrag, umfassend:
(a) einen Einweichschritt mit Wasser, umfassend:
(i) Zugeben von gut gemischtem, flüssigem Einweichabfallwasser und/oder von Frischwasser in eine Trommel, welche die Haut enthält;
(ii) Einführen eines Additivs in die Trommel, wobei das Additiv dazu in der Lage ist, den Abbau des festen Materials zu inhibieren;
(iii) Zugeben von chemischen Materialien, um das Einweichen in Wasser zu bewirken; und
(iv) Sammeln des flüssigen Einweichabfallwassers in einem Behälter zum Aufbewahren des flüssigen Einweichabfallwassers zur Wiederverwendung in nachfolgenden Gerbansätzen;
(b) einen Äscherschritt, umfassend:
(i) Zugeben von gut gemischtem, flüssigem Äscherabfall und/oder von Frischwasser in eine Trommel, welche die Haut enthält;
(ii) Einführen des Additivs in die Trommel;
(iii) Zugeben von chemischen Materialien um das Äschern zu bewirken;
(iv) Zugeben eines Äscherhilfsmittels, von Natriumhydrogensulfid und von Kalk, Filtern von Haaren und Recyceln der Äscherflüssigkeit zurück in die Trommel zum weiteren Äschern;
(v) Zugeben von weiterem, flüssigem Äscherabfall und/oder Frischwasser;
(vi) Einführen des Additivs, Kalks, Natriumsulfids, Entfettungsmittels und Äscherhilfsmittels, um Hautrückstände und dispergierte Fasern zu entfernen;
(vii) Zugeben von weiterem, flüssigem Äscherabfall und/oder Frischwasser und Einführen des Additivs, um ein Aufquellen der geäscherten Haut zu bewirken;
(viii) Herausfiltern fester Materialien aus dem flüssigen Abfall; und
(ix) Sammeln des flüssigen Abfalls des Äscherns in einem Behälter zum Aufbewahren des flüssigen Äscherabfalls zur Wiederverwendung in nachfolgenden Gerbansätzen;
(c) einen erneuten Äscherschritt, umfassend:
(i) Zugeben von gut gemischtem, flüssigem Abfall des erneuten Äscherns und/oder von Frischwasser in eine Trommel, welche die Haut enthält, anschließend hinzugeben eines Additivs in die Trommel;
(ii) Zugeben von chemischen Materialien zum erneuten Äschern;
(iii) Zugeben eines Äscherhilfsmittels, von Natriumsulfid und von Kalk;
(iv) Rotieren der Trommel, um es den zugegebenen chemischen Materialien zu ermöglichen, auf die geäscherte Haut einzuwirken; und
(iv) Rotieren der Trommel, um den zugegebenen chemischen Materialien zu ermöglichen, auf die geäscherte Haut einzuwirken; und
(v) Sammeln des flüssigen Abfalls des erneuten Äscherns in einem Behälter zum Aufbewahren des flüssigen Abfalls des erneuten Äscherns zur Wiederverwendung in nachfolgenden Gerbansätzen, wobei in dem Schritt des erneuten Äscherns kein Feststofffiltern durchgeführt wird;
(d) einen Entäscher- und Weichmachschritt umfassend:
(i) Zugeben von gut gemischtem, flüssigem Entäscher- und Weichmachabfall und/oder von Frischwasser in eine Trommel, welche die Haut enthält;
(ii) Einführen des Additivs in die Trommel;
(iii) Zugeben von chemischen Materialien, um das Entäschern und Weichmachen zu bewirken; und;
(iv) Sammeln des flüssigen Entäscher- und Weichmachabfalls in einem Behälter zum Aufbewahren des flüssigen Entäscher- und Weichmachabfalls zur Wiederverwendung in nachfolgenden Gerbansätzen;
(e) einen Beiz- und Chromgerbungsschritt, umfassend
(i) Zugeben von gut gemischtem, flüssigem Beiz- und Chromgerbungsabfall und/oder von Frischwasser in eine Trommel, welche die Haut enthält;
(ii) Zugeben des Additivs in die Trommel;
(iii) Zugeben von chemischen Materialien um Beizen und Chromgerbung zu bewirken;
(iv) Zugeben von Salz, Fungizid, Ameisensäure und Schwefelsäure, die mit dem flüssigen Beiz- und Chromgerbungsabfall und/oder mit Frischwasser verdünnt worden sind,
(v) Rotieren der Trommel, um den zugegebenen chemischen Stoffen zu ermöglichen, auf die Haut einzuwirken;
(vi) Zugeben von Chrompulver, Natriumformiat und Alkalisierungsmittel, um Chromgerbung zu bewirken;
(vii) Einführen des Additivs und Erhöhen der Temperatur in der Trommel, um eine Bindung des Chrompulvers zu bewirken;
(viii) Sammeln des flüssigen Beiz- und Chromgerbungsabfalls in einem Behälter zum Aufbewahren des flüssigen flüssigen Beiz- und Chromgerbungsabfalls zur Wiederverwendung in nachfolgenden Gerbansätzen; und
(ix) Herausfiltern blauer Hautablagerungen;
(f) einen Entfettungsschritt, umfassend:
(i) Zugeben von gut gemischtem, flüssigem Entfettungsabfall und/oder von Frischwasser in die Trommel, welche die Haut enthält;
(ii) Einführen des Additivs in die Trommel;
(iii) Zugeben von chemischen Materialien, um Entfetten zu bewirken; und;
(iv) Sammeln des flüssigen Entfettungsabfalls in einem Behälter zum Aufbewahren des flüssigen Entfettungsabfalls zur Wiederverwendung in nachfolgenden Gerbansätzen;
(g) einen erneuten Gerbschritt, umfassend:
(i) Zugeben von gut gemischtem, flüssigem Abfall des erneuten Gerbens und/oder von Frischwasser in eine Trommel, welche die Haut enthält;
(ii) Zugeben des Additivs und von verdünnter Ameisensäure oder Schwefelsäure in die Trommel;
(iii) Zugeben von chemischen Materialien, um das erneute Gerben zu bewirken;
(iv) Zugeben von Chrompulver, Proteinpulver, Aldehyd, Natriumformiat und Backpulver in die rotierende Trommel; und
(v) Sammeln des flüssigen Abfalls des erneuten Gerbens in einem Behälter zum Aufbewahren des flüssigen Abfalls des erneuten Gerbens zur Wiederverwendung in nachfolgenden Gerbansätzen;
(h) einen Neutralisationsschritt, umfassend:
(i) Zugeben von gut gemischtem, flüssigem Neutralisationsabfall und/oder von Frischwasser in die Trommel, welche die Haut enthält;
(ii) Zugeben des Additivs in die Trommel;
(iii) Zugeben von neutralisierendem Tannin, von Natriumformiat und von Backnatron, um es den zugegebenen chemischen Materialien zu ermöglichen, auf die Haut einzuwirken; und
(iv) Sammeln des flüssigen Neutralisationsabfalls in einem Behälter zum Aufbewahren des flüssigen Neutralisationsabfalls zur Wiederverwendung in nachfolgenden Gerbansätzen; und
(j) einen Färbeschritt, umfassend:
(i) Zugeben von gut gemischtem, flüssigem Färbungsabfall bei einem pH-Wert von 4,5 bis 7,0 und/oder von Frischwasser in die Trommel, welche die Haut enthält;
(ii) Einführen des Additivs in die Trommel;
(iii) Zugeben von chemischen Materialien zum Färben;
(iv) Zugeben von Acrylsäure, Ameisensäure, Füllstoff, Öl und Farbstoff während die Trommel rotiert wird;
(v) Zugeben von chemischen Materialien, um Färben zu bewirken; und
(vi) Sammeln des flüssigen Färbungsabfalls in einem Behälter zum Aufbewahren des flüssigen Färbungsabfalls zur Wiederverwendung in zukünftigen Gerbansätzen,
wobei das Additiv ein Reagenz ist, das in der Lage ist, die Zersetzung festen Materials zu hemmen und das Recyceln flüssigen Abfalls zu begünstigen, und wobei das Additiv in einer Menge von 0,01% bis 0,5% des Gewichts der Haut vorhanden ist.

2. Hautgerbverfahren nach Anspruch 1, wobei die Menge des wiederverwendbaren flüssigen Abfalls 20% bis 300% des Gewichts der Haut beträgt.

3. Hautgerbverfahren nach Anspruch 1, wobei das Filtern unter Verwendung eines Filters mit einer Porengröße von 2 mm bis 6 mm durchgeführt wird und die durch das Filtern erhaltenen festen Materialien zur Herstellung von Proteinfüllstoff, Entfettungsmittel, Gelatine oder Baustoffen einsetzbar sind.

4. Hautgerbverfahren nach Anspruch 1, wobei die Menge an festem Abfallmaterial in dem flüssigen Abfall die Qualität der gegerbten Haut nicht wesentlich beeinträchtigt.

5. Gerbverfahren nach Anspruch 1, wobei, wenn flüssiger Abfall nicht in ausreichender Menge vorhanden ist, Frischwasser zum Ausgleich zugegeben wird.

6. Hautgerbverfahren mit reduziertem Abfallaustrag, umfassend:
(a) einen Wassereinweichschritt, umfassend:
(i) Zugeben von gut gemischtem, flüssigem Einweichabfallwasser und/oder von Frischwasser in eine Trommel, welche die Haut enthält;
(ii) Einführen eines Additivs in die Trommel, wobei das Additiv in der Lage ist, den Abbau des festen Materials zu inhibieren;
(iii) Zugeben von chemischen Materialien, um das Einweichen in Wasser zu bewirken;
(iv) Sammeln des flüssigen Einweichabfallwassers in einem Behälter zum Aufbewahren des flüssigen Einweichabfallwassers zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

7. Hautgerbverfahren mit reduziertem Abfallaustrag, umfassend:
(a) einen Äscherschritt, umfassend:
(i) Zugeben von gut gemischtem, flüssigem Äscherabfall und/oder von Frischwasser in eine Trommel, welche die Haut enthält;
(ii) Einführen des Additivs in die Trommel;
(iii) Zugeben von chemischen Materialien um das Äschern zu bewirken;
(iv) Zugeben eines Äscherhilfsmittels, von Natriumhydrogensulfid und von Kalk, Herausfiltern von Haaren und Recyceln der Äscherflüssigkeit zurück in die Trommel zum weiteren Äschern;
(v) Zugeben von weiterem, flüssigem Äscherabfall und/oder Frischwasser;
(vi) Einführen des Additivs, Kalks, Natriumsulfids, Entfettungsmittels und Äscherhilfsmittels, um Hautrückstände und dispergierte Fasern zu entfernen;
(vii) Zugeben von weiterem, flüssigem Äscherabfall und/oder von Frischwasser und Einführen des Additivs, um ein Aufquellen der geäscherten Haut zu bewirken;
(viii) Herausfiltern fester Materialien aus dem flüssigen Abfall;
(ix) Sammeln des flüssigen Äscherabfalls in einem Behälter zum Aufbewahren des flüssigen Äscherabfalls zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

8. Hautgerbverfahren mit reduziertem Abfallaustrag, umfassend:
(a) einen erneuten Äscherschritt, umfassend:
(i) Zugeben von gut gemischtem, flüssigem Abfall des erneuten Äscherns und/oder von Frischwasser in eine Trommel, welche die Haut enthält, anschließendes Hinzugeben eines Additiv in die Trommel;
(ii) Zugeben von chemischen Materialien zum erneuten Äschern;
(iii) Zugeben eines Äscherhilfsmittels, von Natriumsulfid und von Kalk;
(iv) Rotieren der Trommel, um es den zugegebenen chemischen Materialien zu ermöglichen, auf die geäscherte Haut einzuwirken;
(v) Sammeln des flüssigen Abfalls des erneuten Äscherns in einem Behälter zum Aufbewahren des flüssigen Abfalls des erneuten Äscherns zur Wiederverwendung in nachfolgenden Gerbansätzen, wobei in dem Schritt des erneuten Äscherns kein Feststofffiltern durchgeführt wird,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

9. Hautgerbverfahren mit reduziertem Abfallaustrag, umfassend:
(a) einen Entäscher- und Weichmachschritt umfassend:
(i) Zugeben von gut gemischtem, flüssigem Entäscher- und Weichmachabfall und/oder von Frischwasser in eine Trommel, das die Haut enthält;
(ii) Einführen des Additivs in die Trommel;
(iii) Zugeben von chemischen Materialien, um das Entäschern und Weichmachen zu bewirken; und
(iv) Sammeln des flüssigen Entäscher- und Weichmachabfalls in einem Behälter zum Aufbewahren des flüssigen Entäscher- und Weichmachabfalls zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

10. Hautgerbverfahren mit reduziertem Abfallaustrag, umfassend:
(a) einen Beiz- und Chromgerbschritt, umfassend
(i) Zugeben von gut gemischtem, flüssigem Beiz- und Chromgerbungsabfall und/oder von Frischwasser in eine Trommel, welche die Haut enthält;
(ii) Zugeben des Additivs in die Trommel;
(iii) Zugeben von chemischen Materialien um Beizen und Chromgerbung zu bewirken;
(iv) Zugeben von Salz, Fungizid, Ameisensäure und Schwefelsäure, die mit dem flüssigen Abfall des Beizens und der Chromgerbung und/oder mit Frischwasser verdünnt wurden,
(v) Rotieren der Trommel, um den zugegebenen chemischen Stoffen zu ermöglichen, auf die Haut einzuwirken;
(vi) Zugeben von Chrompulver, Natriumformiat und Alkalisierungsmittel, um Chromgerbung zu bewirken;
(vii) Einführen des Additivs und Erhöhen der Temperatur in der Trommel, um die Bindung des Chrompulvers zu bewirken;
(viii) Sammeln des flüssigen Beiz- und Chromgerbungsabfalls in einem Behälter zum Aufbewahren des flüssigen Beiz- und Chromgerbungsabfalls zur Wiederverwendung in nachfolgenden Gerbansätzen; und
(ix) Herausfiltern blauer Hautablagerungen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

11. Hautgerbverfahren mit reduziertem Abfallaustrag, umfassend:
(a) einen Entfettungsschritt, umfassend:
(i) Zugeben von gut gemischtem, flüssigem Entfettungsabfall und/oder von Frischwasser in die Trommel, welche die Haut enthält;
(ii) Einführen des Additivs in die Trommel;
(iii) Zugeben von chemischen Materialien, um Entfetten zu bewirken; und
(iv) Sammeln des flüssigen Entfettungsabfalls in einem Behälter zum Aufbewahren des flüssigen Entfettungsabfalls zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

12. Hautgerbverfahren mit reduziertem Abfallaustrag, umfassend:
(a) einen erneuten Gerbungsschritt, umfassend:
(i) Zugeben von gut gemischtem, flüssigem Abfall des erneuten Gerbens und/oder von Frischwasser in eine Trommel, welche die Haut enthält;
(ii) Zugeben des Additivs und von verdünnter Ameisensäure oder Schwefelsäure in die Trommel;
(iii) Zugeben von chemischen Materialien, um das erneute Gerben zu bewirken;
(iv) Zugeben von Chrompulver, Proteinpulver, Aldehyd, Natriumformiat und Backpulver in die rotierende Trommel; und
(v) Sammeln des flüssigen Abfalls des erneuten Gerbens in einem Behälter zum Aufbewahren des flüssigen Abfalls des erneuten Gerbens zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

13. Hautgerbverfahren mit reduziertem Abfallaustrag, umfassend:
(a) einen Neutralisierungsschritt, umfassend:
(i) Zugeben von gut gemischtem, flüssigem Neutralisierungsabfall und/oder Frischwasser in die Trommel, welche die Haut enthält;
(ii) Zugeben des Additivs in die Trommel;
(iii) Zugeben von neutralisierendem Tannin, Natriumformiat und Backnatron, um es den zugegebenen chemischen Materialien zu ermöglichen, auf die Haut einzuwirken; und
(iv) Sammeln des flüssigen Neutralisierungsabfalls in einem Behälter zum Aufbewahren des flüssigen Neutralisierungsabfalls zur Wiederverwendung in nachfolgenden Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

14. Hautgerbverfahren mit reduziertem Abfallaustrag, umfassend:
(a) einen Färbeschritt, umfassend:
(i) Zugeben von gut gemischtem, flüssigem Färbungsabfall bei einem pH-Wert von 4,5 bis 7,0 und/oder Frischwasser in die Trommel, welche die Haut enthält;
(ii) Einführen des Additivs in die Trommel;
(iii) Zugeben von chemischen Materialien zum Färben;
(iv) Zugeben von Acrylsäure, Ameisensäure, Füllstoff, Öl und Farbstoff während die Trommel rotiert wird;
(v) Zugeben von chemischen Materialien, um Färben zu bewirken; und
(vi) Sammeln des flüssigen Färbungsabfalls in einem Behälter zum Aufbewahren des flüssigen Färbungsabfalls zur Wiederverwendung in zukünftigen Gerbansätzen,
wobei das Additiv ein Reagenz ist, das in der Lage ist, den Abbau von festem Material zu inhibieren und das Recyceln flüssigen Abfalls zu begünstigen, und wobei das Additiv in einer Menge von 0,01% bis 0,5% des Gewichts der Haut vorhanden ist.

## Revendications

1. Procédé de tannage de peau à rejet de déchets réduits comprenant:
(a) une étape de trempage dans l'eau consistant à:
(i) ajouter les déchets liquides d'eau de trempage bien mélangés et/ou de l'eau douce dans un tambour contenant la peau;
(ii) introduire un additif dans le tambour, l'additif pouvant inhiber la décomposition de matériau solide;
(iii) ajouter des produits chimiques pour procéder au trempage dans l'eau; et
(iv) collecter les déchets liquides d'eau de trempage dans un réservoir destiné à stocker les déchets liquides d'eau de trempage afin de les réutiliser dans des lots de tannage subséquents;
(b) une étape de pelanage consistant à:
(i) ajouter les déchets liquides d'eau de trempage bien mélangés et/ou de l'eau douce dans un tambour contenant la peau;
(ii) introduire l'additif dans le tambour;
(iii) ajouter des produits chimiques pour procéder au pelanage;
(iv) ajouter un agent de pelanage, de l'hydrogénosulfure de sodium et de la chaux, filtrer les poils et recycler le liquide de pelanage en le renvoyant dans le tambour pour un pelanage ultérieur;
(v) ajouter encore des déchets liquides de pelanage et/ou de l'eau douce;
(vi) introduire l'additif, la chaux, du sulfure de sodium, de l'agent de dégraissage et un agent de pelanage pour retirer les résidus de peau et disperser les fibres;
(vii) ajouter encore des déchets liquides de pelanage et/ou de l'eau douce et introduire l'additif pour procéder au gonflement de la peau pelanée;
(viii) filtrer les matières solides des déchets liquides; et
(ix) collecter les déchets liquides de pelanage dans un réservoir destiné à stocker les déchets liquides de pelanage afin de les réutiliser dans des lots de tannage subséquents;
(c) une étape de re-pelanage consistant à:
(i) ajouter les déchets liquides de re-pelanage bien mélangés et/ou de l'eau douce dans un tambour contenant la peau, ensuite ajouter un additif dans le tambour;
(ii) ajouter des produits chimiques pour le re-pelanage;
(iii) ajouter un agent de pelanage, du sulfure de sodium et de la chaux;
(iv) faire tourner le tambour pour permettre aux produits chimiques ajoutés d'agir sur la peau pelanée; et
(v) collecter les déchets liquides de re-pelanage dans un réservoir destiné à stocker les déchets liquides de pelanage afin de les réutiliser pour des lots de tannage subséquents,
aucune filtration de matières solides n'est effectuée dans l'étape de re-pelanage;
(d) une étape de déchaulage et d'assouplissement consistant à:
(i) ajouter les déchets liquides d'eau de déchaulage et d'assouplissement bien mélangés et/ou de l'eau douce dans un tambour contenant la peau;
(ii) introduire l'additif dans le tambour;
(iii) ajouter des produits chimiques pour procéder au déchaulage et à l'assouplissement et;
(iv) collecter les déchets liquides de déchaulage et d'assouplissement dans un réservoir destiné à stocker les déchets liquides de déchaulage et d'assouplissement pour les réutiliser dans des lots de tannage subséquents;
(e) une étape de tannage au chrome et de pickelage consistant à:
(i) ajouter les déchets liquides d'eau de pickelage et de tannage au chrome bien mélangés et/ou de l'eau douce dans un tambour contenant la peau;
(ii) introduire l'additif dans le tambour;
(iii) ajouter des produits chimiques pour procéder au pickelage et au tannage au chrome;
(iv) ajouter du sel, des fongicides, de l'acide formique et de l'acide sulfurique qui ont été dilués avec les déchets liquides de pickelage et de tannage au chrome et/ou avec de l'eau douce,
(v) faire tourner le tambour pour permettre aux produits chimiques ajoutés d'agir sur la peau;
(vi) ajouter le chrome en poudre, du formiate de sodium et un agent de basification pour procéder au tannage au chrome;
(vii) introduire l'additif et augmenter la température dans le tambour pour procéder à la fixation du chrome en poudre;
(viii) collecter les déchets liquides de tannage au chrome et de pickelage dans un réservoir destiné à stocker les déchets liquides de tannage au chrome et de pickelage pour les réutiliser dans des lots de tannage subséquents; et
(ix) filtrer les résidus bleus de peau;
(f) une étape de dégraissage consistant à:
(i) ajouter les déchets liquides de dégraissage bien mélangés et/ou de l'eau douce dans un tambour contenant la peau;
(ii) introduire l'additif dans le tambour;
(iii) ajouter des produits chimiques pour procéder au dégraissage; et
(iv) collecter les déchets liquides de dégraissage dans un réservoir destiné à stocker les déchets liquides de dégraissage pour les réutiliser dans des lots de tannage subséquents;
(g) une étape de re-tannage consistant:
(i) ajouter les déchets liquides de re-tannage bien mélangés et/ou de l'eau douce dans un tambour contenant la peau;
(ii) ajouter l'additif et l'acide formique diluée ou de l'acide sulfurique dans le tambour;
(iii) ajouter les produits chimiques pour procéder au re-tannage;
(iv) ajouter le chrome en poudre, la poudre de protéine, l'aldéhyde, le formiate de sodium et le bicarbonate de sodium dans le tambour tournant; et
(v) collecter les déchets liquides de re-tannage dans un réservoir destiné à stocker les déchets liquides de re-tannage pour les réutiliser dans des lots de tannage subséquents;
(h) une étape de neutralisation consistant à:
(i) ajouter les déchets liquides de neutralisation bien mélangés et/ou de l'eau douce dans un tambour contenant la peau;
(ii) ajouter l'additif dans le tambour;
(iii) ajouter le tanin de neutralisation, le formiate de sodium et le bicarbonate de soude pour permettre aux produits chimiques ajoutés d'agir sur la peau; et
(iv) collecter les déchets liquides de neutralisation dans un réservoir destiné à stocker les déchets liquides de neutralisation pour les réutiliser dans des lots de tannage subséquents; et
(j) une étape de séchage consistant à:
(i) ajouter les déchets de liquides de séchage bien mélangés ayant une valeur de pH comprise entre 4,5 et 7,0 et/ou de l'eau douce dans un tambour contenant la peau;
(ii) introduire l'additif dans le tambour;
(iii) ajouter les produits chimiques pour le séchage;
(iv) ajouter l'acide acrylique, l'acide formique, la charge, l'huile et la teinture lorsque le tambour tourne;
(v) ajouter les produits chimiques pour procéder au séchage; et
(vi) collecter les déchets liquides de séchage dans un réservoir destiné à stocker les déchets liquides de séchage pour les réutiliser dans les lots de tannage subséquents,
l'additif étant un réactif pouvant inhiber la décomposition des matières solides et favoriser le recyclage des déchets liquides et l'additif étant présent à hauteur de 0,01% et 0,5% du poids de la peau.

2. Procédé de tannage de peau selon la revendication 1, la quantité de déchets liquides réutilisables étant comprise entre 20% et 300% du poids de peau.

3. Procédé de tannage de peau selon la revendication 1, la filtration étant effectuée à l'aide d'un filtre ayant une taille de pore comprise entre 2mm et 6mm, et les matières solides obtenues à partir de la filtration pouvant être utilisées pour produire une matière de remplissage à base de protéine, l'agent de dégraissage, la gélatine ou des matériaux de construction.

4. Procédé de tannage de peau selon la revendication 1, la quantité de matériaux de déchets solides dans les déchets liquides n'altérant pas sensiblement la qualité de la peau tannée.

5. Procédé de tannage de peau selon la revendication 1, lorsque les déchets liquides ne sont pas présents en quantité suffisante, de l'eau douce est ajoutée pour compléter.

6. Procédé de tannage de peau à rejet de déchets réduits comprenant:
a) une étape de trempage dans l'eau consistant à:
(i) ajouter les déchets liquides d'eau de trempage bien mélangé et/ou de l'eau douce dans un tambour contenant la peau;
(ii) introduire un additif dans le tambour, l'additif pouvant inhiber la décomposition de matériau solide;
(iii) ajouter des produits chimiques pour procéder au trempage dans l'eau;
(iv) collecter les déchets liquides d'eau de trempage dans un réservoir destiné à stocker le déchet liquide d'eau de trempage afin de le réutiliser dans des lots de tannage subséquents;
l'additif étant un réactif pouvant inhiber la décomposition des matières solides et favoriser le recyclage des déchets liquides et l'additif étant présent à hauteur de 0,01% et 0,5% du poids de la peau.

7. Procédé de tannage de peau à rejet de déchets réduits comprenant:
(b) une étape de pelanage consistant à:
(i) ajouter les déchets liquides d'eau de trempage bien mélangés et/ou de l'eau douce dans un tambour contenant la peau;
(ii) introduire un additif dans le tambour;
(iii) ajouter des produits chimiques pour procéder au pelanage;
(iv) ajouter un agent de pelanage, de l'hydrogénosulfure de sodium et de la chaux, filtrer les poils et le liquide de pelanage en le renvoyant dans le tambour pour un pelanage ultérieur;
(v) ajouter encore des déchets liquides de pelanage et/ou de l'eau douce;
(vi) introduire l'additif, la chaux, du sulfure de sodium, de l'agent de dégraissage et un agent de pelanage pour retirer les résidus de peau et disperser les fibres;
(vii) ajouter encore des déchets liquides de pelanage et/ou de l'eau douce et introduire l'additif pour procéder au gonflement de la peau pelanée;
(viii) filtrer les matières solides des déchets liquides; et
(ix) collecter les déchets liquides de pelanage dans un réservoir destiné à stocker les déchets liquides de pelanage afin de le réutiliser dans des lots de tannage subséquents;
l'additif étant un réactif pouvant inhiber la décomposition des matières solides et favoriser le recyclage des déchets liquides et l'additif étant présent à hauteur de 0,01% et 0,5% du poids de la peau.

8. Procédé de tannage de peau à rejet de déchets réduits comprenant:
(a) une étape de re-pelanage consistant à:
(i) ajouter les déchets liquides de re-pelanage bien mélangés et/ou de l'eau douce dans un tambour contenant la peau, ensuite ajouter un additif dans le tambour;
(ii) ajouter des produits chimiques pour le re-pelanage;
(iii) ajouter un agent de pelanage, du sulfure de sodium et de la chaux;
(iv) faire tourner le tambour pour permettre aux produits chimiques ajoutés d'agir sur la peau pelanée;
(v) collecter les déchets liquides de re-pelanage dans un réservoir destiné à stocker les déchets liquides de pelanage afin de les réutiliser pour des lots de tannage subséquents,
l'additif étant un réactif pouvant inhiber la décomposition des matières solides et favoriser le recyclage des déchets liquides et l'additif étant présent à hauteur de 0,01% et 0,5% du poids de la peau.

9. Procédé de tannage de peau à rejet de déchets réduits comprenant:
(a) une étape de déchaulage et d'assouplissement consistant à:
(i) ajouter les déchets liquides d'eau de et d'assouplissement bien mélangés et/ou de l'eau douce dans un tambour contenant la peau;
(ii) introduire l'additif dans le tambour;
(iii) ajouter des produits chimiques pour procéder au déchaulage et d'assouplissement; et
(iv) collecter les déchets liquides de déchaulage et d'assouplissement dans un réservoir destiné à stocker les déchets liquides de déchaulage et d'assouplissement dans un réservoir destiné à stocker les déchets liquides de déchaulage et d'assouplissement pour les réutiliser dans des lots de tannage subséquents;
l'additif étant un réactif pouvant inhiber la décomposition des matières solides et favoriser le recyclage des déchets liquides et l'additif étant présent à hauteur de 0,01% et 0,5% du poids de la peau.

10. Procédé de tannage de cuir à rejet de déchets réduits comprenant:
une étape de tannage au chrome et de pickelage consistant à:
(i) ajouter les déchets liquides d'eau de pickelage et de tannage au chrome bien mélangés et/ou de l'eau douce dans un tambour contenant la peau;
(ii) introduire l'additif dans le tambour;
(iii) ajouter des produits chimiques pour procéder au pickelage et au tannage au chrome;
(iv) ajouter du sel, des fongicides, de l'acide formique et de l'acide sulfurique qui ont été dilués avec les déchets liquides de pickelage et de tannage au chorme et/ou avec de l'eau douce,
(v) faire tourner le tambour pour permettre aux produits chimiques ajoutés d'agir sur la peau;
(vi) ajouter de chrome en poudre, du formiate de sodium et un agent de basification pour procéder au tannage au chrome;
(vii) introduire l'additif et augmenter la température dans le tambour pour procéder à la fixation du chrome en poudre;
(viii) collecter les déchets liquides de tannage au chrome et de pickelage dans un réservoir destiné à stocker les déchets liquides de tannage au chrome et de pickelage pour réutiliser dans des lots de tannage subséquents; et
(ix) filtrer les résidus bleus de peau
l'additif étant un réactif pouvant inhiber la décomposition des matières solides et favoriser le recyclage des déchets liquides et l'additif étant présent à hauteur de 0,01% et 0,5% du poids de la peau.

11. Procédé de tannage de peau à rejet de déchets réduits comprenant:
(a) une étape de dégraissage consistant à:
(i) ajouter les déchets liquides de dégraissage bien mélangés et/ou de l'eau douce dans un tambour contenant la peau;
(ii) introduire l'additif dans le tambour;
(iii) ajouter des produits chimiques pour procéder au dégraissage; et
(iv) collecter les déchets liquides de dégraissage dans un réservoir destiné à stocker les déchets liquides de dégraissage pour les réutiliser dans des lots de tannage subséquents
l'additif étant un réactif pouvant inhiber la décomposition des matières solides et favoriser le recyclage des déchets liquides et l'additif étant présent à hauteur de 0,01% et 0,5% du poids de la peau.

12. Procédé de tannage de cuir à rejet de déchets réduits comprenant:
une étape de re-tannage consistant:
(i) ajouter les déchets liquides de re-tannage bien mélangés et/ou de l'eau douce dans un tambour contenant la peau;
(ii) ajouter l'additif et l'acide formique diluée ou de l'acide sulfurique dans le tambour;
(iii) ajouter les produits chimiques pour procéder au re-tannage;
(iv) ajouter le chrome en poudre, la poudre de protéine, l'aldéhyde, le formiate de sodium et le bicarbonate de sodium dans le tambour tournant; et
(v) collecter les déchets liquides de re-tannage dans un réservoir destiné à stocker les déchets liquides de re-tannage pour les réutiliser dans des lots de tannage subséquents;
l'additif étant un réactif pouvant inhiber la décomposition des matières solides et favoriser le recyclage des déchets liquides et l'additif étant présent à hauteur de 0,01% et 0,5% du poids de la peau.

13. Procédé de tannage de cuir à rejet de déchets réduits comprenant:
(a) une étape de neutralisation consistant à:
(i) ajouter les déchets liquides de neutralisation bien mélangés et/ou de l'eau douce dans un tambour contenant la peau;
(ii) ajouter l'additif dans le tambour;
(iii) ajouter le tanin de neutralisation, le formiate de sodium et le bicarbonate de soude pour permettre aux produits chimiques ajoutés d'agir sur la peau; et
(iv) collecter les déchets liquides de neutralisation dans un réservoir destiné à stocker les déchets liquides de neutralisation pour les réutiliser dans des lots de tannage subséquents,
l'additif étant un réactif pouvant inhiber la décomposition des matières solides et favoriser le recyclage des déchets liquides et l'additif étant présent à hauteur de 0,01% et 0,5% du poids de la peau.

14. Procédé de tannage de cuir à rejet de déchets réduits comprenant:
(a) une étape de séchage consistant à:
(i) ajouter les déchets de liquides de séchage bien mélangés ayant une valeur de pH comprise entre 4,5 et 7,0 et/ou de l'eau douce dans un tambour contenant la peau;
(ii) introduire l'additif dans le tambour;
(iii) ajouter les produits chimiques pour le séchage;
(iv) ajouter l'acide acrylique, l'acide formique, la charge, l'huile et la teinture lorsque le tambour tourne;
(v) ajouter les produits chimiques pour procéder au séchage; et
(vi) collecter les déchets liquides de séchage dans un réservoir destiné à stocker les déchets liquides de séchage pour les réutiliser dans les lots de tannage subséquents,
l'additif étant un réactif pouvant inhiber la décomposition des matières solides et favoriser le recyclage des déchets liquides et l'additif étant présent à hauteur de 0,01% et 0,5% du poids de la peau.
